# EUROPÄISCHE PATENTSCHRIFT

(11) **EP 2 248 594 B1**
(45) Veröffentlichungstag und Bekanntmachung des Hinweises auf die Patenterteilung: **10.07.2019**
(21) Anmeldenummer: 10004621.8
(22) Anmeldetag: 03.05.2010
(51) Int. Cl.: B05B 7/00, B05B 7/04, A01M 7/00, B05B 1/00, B05B 7/24

(54) **Sprühkopf für ein Blasrohr eines Sprühgerätes**
Spray head for a blast pipe of a spray device
Tête de pulvérisation pour un tube de soufflage d'un appareil de pulvérisation

(30) Priorität: 06.05.2009 DE 102009020095
(43) Veröffentlichungstag der Anmeldung: 10.11.2010
(73) Patentinhaber: Andreas Stihl AG & Co. KG, 71336 Waiblingen (DE)
(72) Erfinder: Stein, Marcus, Dr., 70794 Filderstadt (DE); Herzog, Markus, 71384 Weinstadt (DE); Bähr, Christine, 73061 Ebersbbach (DE)
(74) Vertreter: Wasmuth, Rolf

(56) Entgegenhaltungen:
- DE-A1-102006 037 483
- DE-B- 1 186 681
- FR-E- 78 386
- US-A- 5 240 186

## Beschreibung

Die Erfindung betrifft einen Sprühkopf für ein Blasrohr eines Sprühgerätes nach dem Oberbegriff des Anspruchs 1.

Ein Sprühgerät ist aus der DE 10 2006 037 483 A1 bekannt. Der Sprühkopf ist als Endabschnitt auf ein Blasrohr aufsteckbar, wobei ein äußeres Zuführrohr quer zur Strömungsrichtung der Blasluft den Sprühkopf durchragt. Über einen äußeren Zuführanschluss wird das zu versprühende Medium wie eine Flüssigkeit oder dgl. Sprühmittel aus einem Sprühmittelbehälter zugeführt und über eine innerhalb des Sprühkopfes liegende Abgabeöffnung in den Blasluftstrom abgegeben.

Aus der FR 78 386 E ist ein Zerstäuber bekannt, dessen Zuführrohr in ein Anströmelement in der Form eines Venturi mündet.

Aus der DE 1 186 681 B ist ein Sprühkopf mit einem Zuführrohr bekannt, das in eine Düse mündet.

Aus der US 5,240,186 A ist ein Sprühkopf mit einer Abgabeöffnung bekannt, die abgeschattet im Luftstrom angeordnet ist.

In der Praxis hat sich gezeigt, dass die Blasluft zu Geräuschanregungen im Sprühkopf führt, was die Umwelt und die Bedienungsperson akustisch belastet.

Der Erfindung liegt die Aufgabe zugrunde, einen Sprühkopf der gattungsgemäßen Art derart auszubilden, dass eine von der Blasluft verursachte Geräuschanregung möglichst reduziert ist.

Die Aufgabe wird nach den kennzeichnenden Merkmalen des Anspruchs 1 gelöst.

Durch die Anordnung eines Störkörpers am stromauf liegenden Rand der Abgabeöffnung auf der Anströmseite der Blasluft werden an der Abgabeöffnung angeregte Geräusche unterbunden, wodurch die Geräuschemission des Sprühkopfes signifikant gesenkt ist.

Zweckmäßig werden alle innerhalb eines Sprühkopfes vorgesehenen Abgabeöffnungen mit einem Störkörper versehen, so dass ein vom Zuführrohr zentral gespeister Abgabekanal an beiden als Abgabeöffnungen ausgebildeten Enden je einen Störkörper aufweist.

In bevorzugter Ausgestaltung der Erfindung ist der Sprühkopf mit dem Zuführrohr und inneren Einbauten als einteiliges Bauteil ausgebildet, wobei der Abgabeöffnung eine in der Wand des Sprühkopfes ausgebildete Schieberöffnung zugeordnet ist, die achsgleich mit der Abgabeöffnung und dem Abgabekanal liegt. Stromauf einer Schieberöffnung ist an deren Rand an der Anströmseite der Blasluft ebenso wie bei der Abgabeöffnung ein Störkörper für die anströmende Luft angeordnet.

Dadurch wird erreicht, dass die bei einer einteiligen Ausführung des Sprühkopfes konstruktiv notwendigen Schieberöffnungen im Betrieb des Sprühkopfes keine Geräuschanregung verursachen. Der Sprühkopf kann mit einfachen Mitteln als Kunststoffspritzteil hergestellt werden, wobei die an den Öffnungen vorgesehenen Störkörper bei der Herstellung des Sprühkopfes einteilig angeformt werden.

Erfindungsgemäß kann der Störkörper als erhabener Randwulst der Öffnung bzw. Randwand ausgebildet sein, wobei der Störkörper die jeweilige Öffnung über einen Umfangswinkel von bis zu 180° umgeben kann. Zweckmäßig ist auf jeder von der Blasluft überströmten Seite einer Öffnung ein Störkörper vorgesehen.

In Weiterbildung der Erfindung bilden alle Störkörper aller Öffnungen zusammen ein gemeinsames Bauteil, das z. B. als stromauf der Öffnung angeordneter Stab ausgebildet sein kann, der quer zur Strömungsrichtung im Blasluftstrom bzw. dem Sprühkopf liegt.

In einer einfachen Ausführungsform ist der Stab ein Rundstab, der im Rand einer Öffnung liegt; zweckmäßig ist der Stab im Querschnitt eine Halbzylinderschale.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: ein rückengetragenes Sprühgerät in schematischer Seitenansicht,
- Fig. 2: einen Schnitt durch den Sprühkopf längs der Linie II-II in Fig. 1,
- Fig. 3: einen Schnitt durch den Sprühkopf längs der Linie III-III in Fig. 2,
- Fig. 4: in perspektivischer Darstellung einen teilgeschnittenen Sprühkopf,
- Fig. 5: in perspektivischer Darstellung einen Schnitt durch den Sprühkopf entsprechend der Schnittdarstellung in Fig. 2,
- Fig. 6: einen perspektivischen Teilschnitt durch einen Sprühkopf in einer geänderten Ausführungsform,
- Fig. 7: einen Schnitt durch den Sprühkopf nach Fig. 6 in einer Ansicht entsprechend Fig. 2,
- Fig. 8: einen perspektivischen Teilschnitt durch einen Sprühkopf in einer weiteren Ausführungsform,
- Fig. 9: einen Schnitt durch den Sprühkopf nach Fig. 8 in einer Darstellung entsprechend Fig. 2.

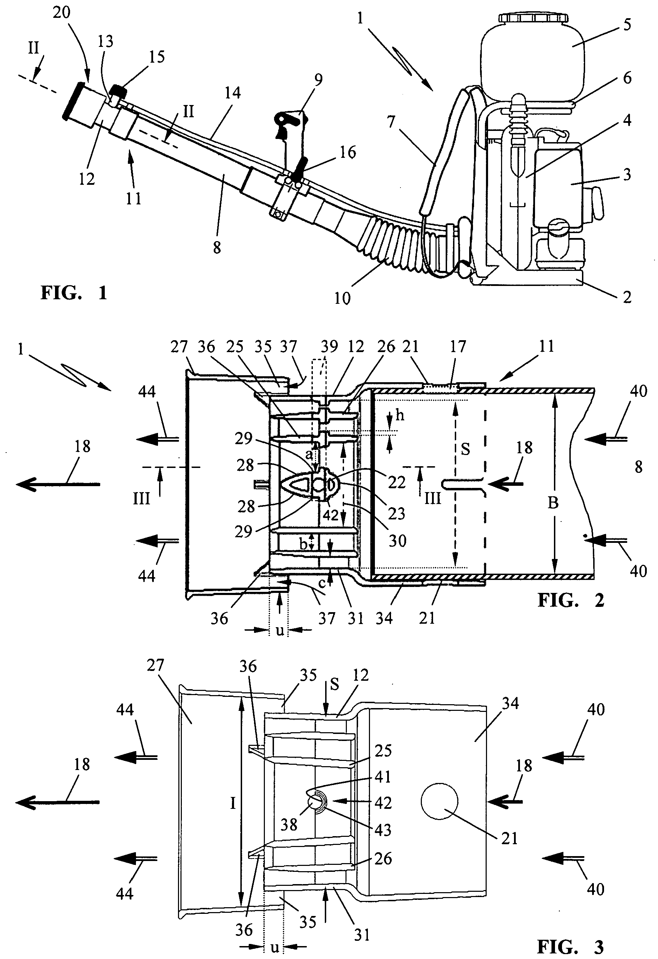

Das in Fig. 1 dargestellte, rückentragbare Sprühgerät 1 besteht im Wesentlichen aus einem Traggestell 2 mit einem darauf gehaltenen Verbrennungsmotor 3, der ein Gebläse 4 antreibt. Oberhalb des Verbrennungsmotors 3 und des Gebläses 4 ist ein Sprühmitteltank 5 angeordnet, der über einen Tragrahmen 6 am Traggestell 2 gehalten ist. Der Benutzer schultert das Traggestell 2 mit dem Verbrennungsmotor 3, dem Gebläse 4 und dem Sprühmitteltank 5 und trägt dieses auf dem Rücken ähnlich einem Rucksack. Entsprechend ist das Traggestell 2 mit Tragriemen 7 versehen.

Das Gebläse 4 fördert Blasluft in ein Blasrohr 8, welches vom Benutzer über einen Bedienelemente aufweisenden Handgriff 9 geführt ist. Das Blasrohr 8 ist über einen flexiblen Blasrohrabschnitt 10 mit dem Gehäuse des Gebläses 4 verbunden, so dass der Benutzer das am Handgriff 9 getragene und geführte Blasrohr 8 ohne wesentliche Krafteinleitung in die Rückentrage in einer beliebigen Bewegung schwenken kann.

Am vorderen Ende 11 des Blasrohrs 8 ist ein Sprühkopf 20 aufgesetzt, der - wie nachfolgend beschrieben - auf dem Ende 11 des Blasrohrabschnittes aufgesteckt und in seiner aufgesteckten Lage über Rastmittel 17 (Fig. 2) gesichert ist. Der Sprühkopf 20 bildet somit den Endabschnitt 12 des Blasrohres 8.

In den Sprühkopf 20 ragt ein Strömungskörper 22, der ein Zuführrohr 13 für das zu versprühende Medium wie z. B. Flüssigkeiten oder dgl. Sprühmittel bildet. Im gezeigten Ausführungsbeispiel ist das Zuführrohr 13 von einem Zuführschlauch 14 gespeist, der unmittelbar am Sprühmitteltank 5 angeschlossen ist. Bevorzugt ist der Zuführschlauch 14 an einer tiefsten Stelle des Sprühmitteltanks 5 angeschlossen, so dass die Schwerkraft zur Förderung des Mediums genutzt werden kann.

Im gezeigten Ausführungsbeispiel nach Fig. 1 ist am Zuführrohr ein Mengenventil 15 vorgesehen, um die dem Blasluftstrom zugeführte Menge des Mediums zu regulieren. Zweckmäßig ist in Höhe des Handgriffs 9 ein Sperrventil 16 vorgesehen, mit dem der Zuführschlauch 14 vollständig gesperrt werden kann.

Der Sprühkopf 20 ist in den Figuren 2 bis 5 in einzelnen Schnittdarstellungen wiedergegeben.

Der Sprühkopf 20 besteht aus dem Blasrohrabschnitt 12, der als Endabschnitt auf das vordere Ende 11 des Blasrohrs 8 aufgesteckt wird. Rastmittel 17 des Blasrohres 8 greifen in entsprechende Rastöffnungen 21 des Sprühkopfes 20, so dass der Sprühkopf 20 in einer vorbestimmten Drehlage drehfest und axial gesichert auf dem Ende 11 des Blasrohres 8 gehalten ist.

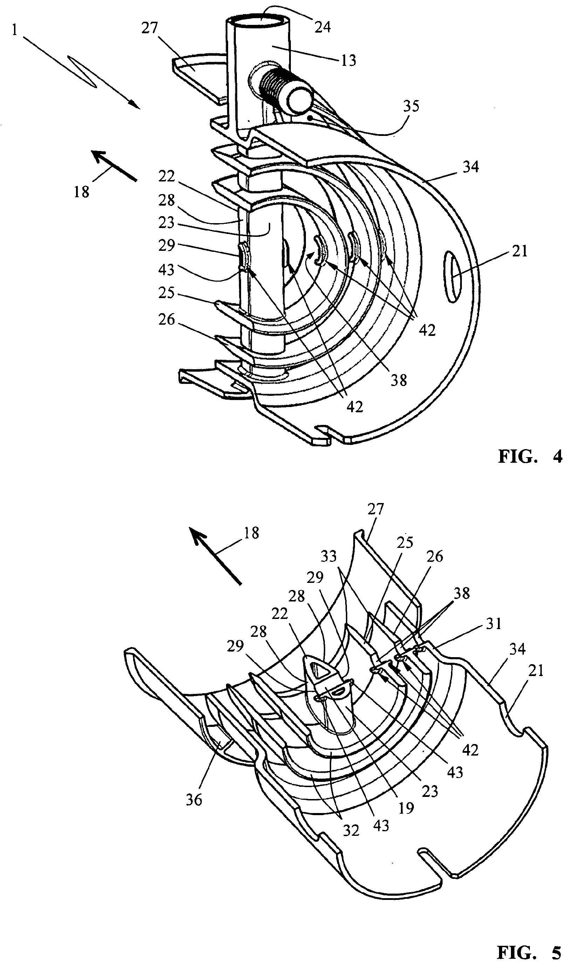

Im gezeigten Ausführungsbeispiel ist der Sprühkopf 20 im gesamten Durchmesser von einem Strömungskörper 22 durchragt, der - vgl. die Figuren 2 und 5 - im Querschnitt ein flügelähnliches Profil hat und an einem Ende aus dem Sprühkopf herausragt. Die Anströmseite 23 des Strömungskörpers 22 ist halbkreisförmig gerundet; in Strömungsrichtung 18 verjüngt sich der Strömungskörper zu dem genannten, in Draufsicht nach den Figuren 2 und 5 gezeigten flügelähnlichen Profil.

Der den Sprühkopf 20 durchragende Strömungskörper 22 bildet ein Zuführrohr 13 mit einem Zuführkanal 24 für das zu versprühende Medium und dient ferner als konstruktiver Träger für innere Leitringe 25 und 26. Die inneren Leitringe 25, 26 liegen etwa konzentrisch im Endabschnitt 12, wobei im inneren Leitring 25 ein Abgabekanal 19 mündet, der vom Zuführkanal 24 gespeist ist. Der Abgabekanal 19 erstreckt sich quer zur Strömungsrichtung 18 und endet an den aufeinander zulaufenden Seitenflächen 28 des Strömungskörpers 22. Der Abgabekanal 19 liegt - wie die Draufsicht nach Fig. 2 zeigt - in Strömungsrichtung 18 unmittelbar hinter der Anströmseite 23 des Strömungskörpers 22, wobei die durch die Enden des Abgabekanals 19 gebildeten Abgabeöffnungen 29 mit ihrer Ebene etwa parallel zur Strömungsrichtung 18 liegen. Wie Fig. 4 zeigt, liegt der Abgabekanal 19 auf Höhe eines Durchmessers 30, der in der in Fig. 1 gezeigten Normallage des Blasrohres 8 etwa horizontal liegt.

Die Abgabeöffnungen 29 liegen mit einem Abstand a zum inneren Leitring 25, wobei die Abgabeöffnungen 29 etwa auf der Höhe des Zentrums des Leitrings 25 vorgesehen sind.

Zwischen dem inneren Leitring 25 und der Zylinderwand 31 des Endabschnittes 12 liegt ein weiterer Leitring 26, der im gezeigten Ausführungsbeispiel einen größeren Abstand b zum inneren Leitring 25 aufweist als zur äußeren Zylinderwand 31, zu der der Leitring mit einem Abstand c liegt.

Wie Fig. 5 zeigt, ist die angeströmte Stirnseite 32 gerundet, während die auf der Abströmseite liegende Stirnseite 33 eines Leitrings in Strömungsrichtung 18 spitz ausläuft.

Der Endabschnitt 12 hat einen im Durchmesser erweiterten Anschlussabschnitt 34, in den das vordere Ende 11 des Blasrohres 8 eingeschoben ist. Die Gestaltung ist so vorgenommen, dass der Innendurchmesser B des Blasrohres etwa dem Innendurchmesser S des Sprühkopfes entspricht.

Es kann zweckmäßig sein, wie in Fig. 3 gezeigt, dass sich die Leitringe 25 und 26 in Strömungsrichtung 18 im Durchmesser leicht erweitern.

Die Zylinderwand 31 des Sprühkopfes 20 mündet in ein Strömungsrohr 27, welches im Innendurchmesser I größer als der Außendurchmesser der Zylinderwand 31 ausgebildet ist, so dass sich ein Ringspalt 35 zwischen der Zylinderwand 31 des Sprühkopfes 20 und dem Strömungsrohr 27 ergibt.

Das Strömungsrohr 27 ist über radiale Rippen 36 an der äußeren Zylinderwand 31 des Endabschnittes 12 gehalten, wobei die Zylinderwand 31 des Endabschnittes 12 und das Strömungsrohr 27 einander um den Betrag u überlappen.

Die von dem Gebläse 4 geförderte, anströmende Blasluft 40 durchströmt den Sprühkopf 20 in Strömungsrichtung 18, wobei an den Abgabeöffnungen 29 austretendes Medium als Sprühmittel fein verteilt mitgerissen wird. Die in Strömungsrichtung 18 abströmende Blasluft 44 ist somit mit dem als Sprühmittel verwendeten Medium angereichert, wobei der aus dem Sprühkopf 20 austretende Sprühnebel zusätzlich mit Umgebungsluft 37 vermischt wird, die nach dem Injektorprinzip durch den Ringspalt 35 zuströmt.

Der gezeigte Sprühkopf 20, d. h. der Blasrohrendabschnitt 12 mit seinem Anschlussabschnitt 34 und der Zylinderwand 31, das Zuführrohr 27 und der Strömungskörper 22 sind als einteiliges Bauteil ausgebildet, vorzugsweise ein einteiliges Kunststoffbauteil.

Der einteilig gefertigte Sprühkopf 20 kann somit in einer Form durch einen einfachen Fertigungsprozess hergestellt werden, wobei der Zuführkanal 24 und der Abgabekanal 19 durch Schieber ausgebildet werden. Der zur Ausbildung des Abgabekanals 19 vorgesehene Schieber 39 durchdringt die Leitringe 25 und 26 sowie die Zylinderwand 31, so dass das fertige Bauteil Schieberöffnungen 38 zeigt. Die Ebenen der Schieberöffnungen 38 liegen etwa parallel zur Strömungsrichtung 18, wobei die Schieberöffnungen 38 und die Abgabeöffnungen 29 achsgleich und parallel zueinander liegen.

Um die durch die anströmende Blasluft angeregten Geräusche an den Öffnungen 29, 38 zu reduzieren, ist vorgesehen, am stromauf liegenden Rand 41 der Abgabeöffnung 19 und/oder Schieberöffnungen 38 einen Störkörper 42 für die anströmende Blasluft vorzusehen. Dabei ist der Störkörper 42 auf jeder von der Blasluft überströmten Seite einer Öffnung 38 vorgesehen. Die Schieberöffnungen haben somit innerhalb und außerhalb des Leitrings 25, 26 jeweils einen Störkörper 42 am stromauf liegenden Rand 41 der Öffnung 29, 38.

Im gezeigten Ausführungsbeispiel nach den Figuren 2 bis 5 ist der Störkörper als Randwulst 43 bzw. Randwand ausgebildet, der den Rand 41 auf der Anströmseite über einen Winkel von bis zu 180° umgibt. Der Randwulst 43 bzw. eine Randwand erstreckt sich somit bis über den halben Umfang des Randes 41, so dass die gesamte Anströmseite der Öffnung 38 bzw. der Abgabeöffnung 29 abgedeckt ist. Die Öffnung 29 bzw. 38 liegt somit im Wesentlichen im Windschatten des Störkörpers 42. Mit dieser Maßnahme ist die Geräuschanregung deutlich abgesenkt, so dass ein "leiser" Sprühkopf geschaffen ist. Die Höhe des Randwulstes bzw. der Randwand ist nur wenige Millimeter groß. Wie Fig. 2 zeigt, entspricht die Höhe h etwa 20% bis 40% des Abstandes a zwischen der Abgabeöffnung 29 und dem inneren Leitring 25 bzw. des Abstandes b zwischen den Leitringen 25 und 26.

Die in der äußeren Zylinderwand 31 vorgesehene Schieberöffnung 38 hat lediglich auf ihrer dem äußeren Leitring 26 zugewandten Seite einen Störkörper 42, da die andere Seite der Schieberöffnung 38 in der Zylinderwand 31 nicht von der Blasluft überströmt ist.

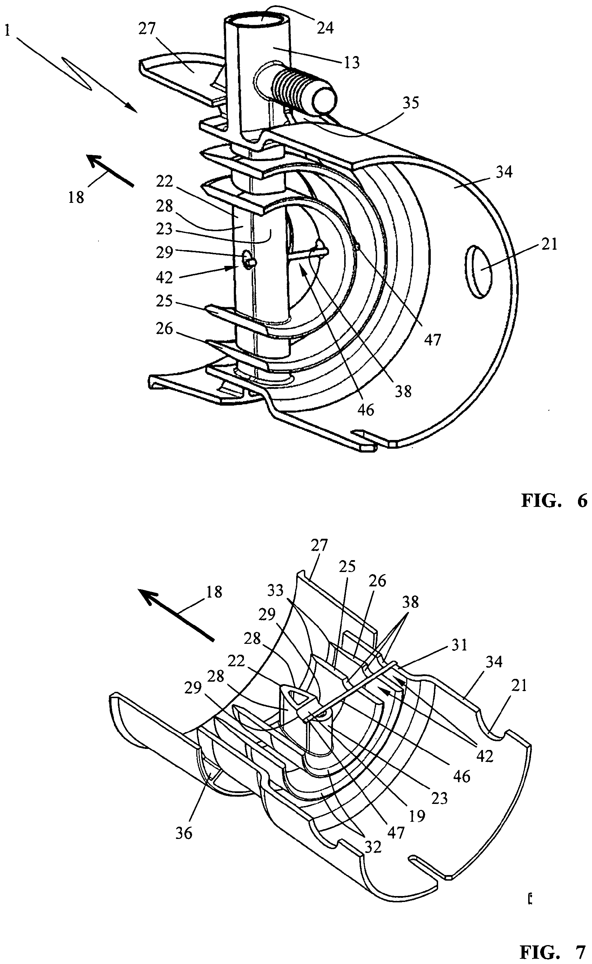

In Weiterbildung der Erfindung nach dem Ausführungsbeispiel der Figuren 6 und 7 ist an dem stromauf liegenden Rand 41 der Abgabeöffnung 29 bzw. der Schieberöffnungen 38 ein Störkörper 42 in Form eines Stabes 46 angeordnet. Der Stab 46 ist im gezeigten Ausführungsbeispiel vorteilhaft ein Rundstab 47, der einen Winkelbereich von weniger als 180° des Randes 41 der Öffnung abschattet. Im gezeigten Ausführungsbeispiel wird mit dem Rundstab ein angeströmter Randabschnitt 41 von ca. 30° abgedeckt, wobei durch entsprechende Wahl des Durchmessers des Rundstabes 47 kleinere oder größere Umfangswinkel des stromauf liegenden, angeströmten Randes 41 der Öffnung 38 abgedeckt werden können.

Im Ausführungsbeispiel nach den Figuren 5 und 6 bilden die an den einzelnen Öffnungen 29 und 38 vorgesehenen Stäbe 46 einen gemeinsamen Rundstab 47, der sich - vgl. Fig. 7 - von der einen Seite der Zylinderwand 31 durch die Leitringe 25, 26 hindurch und den Abgabekanal 19 erstreckt.

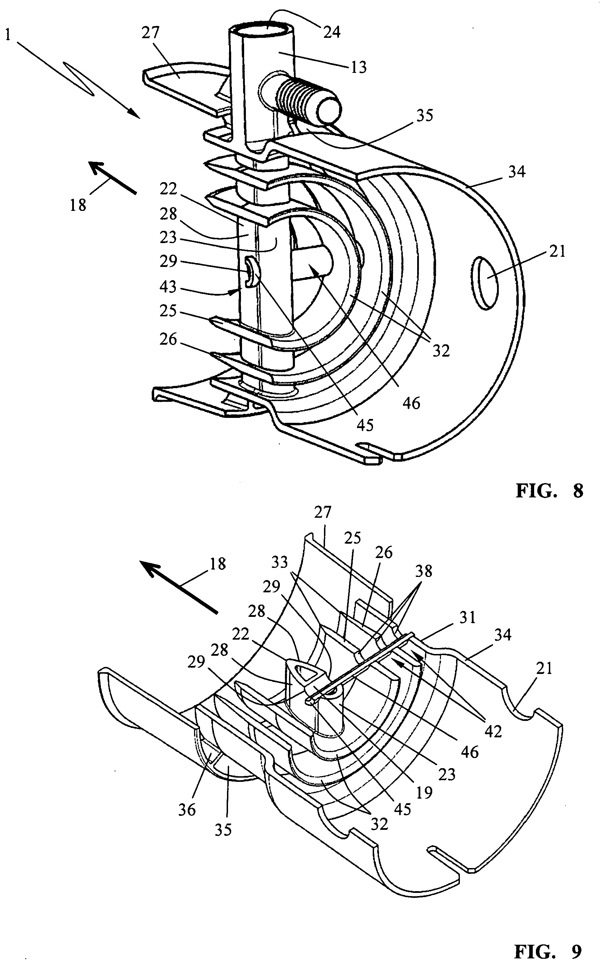

Im Ausführungsbeispiel nach den Figuren 8 und 9 ist der Stab 46 als halbes Zylinderrohr 45 ausgebildet, dessen Außendurchmesser etwa dem Außendurchmesser der Abgabeöffnung 29 bzw. der Schieberöffnungen 38 entspricht. Die Halbzylinderschale 45 erstreckt sich über den halben Umfang der Öffnung 29 bzw. 38, wobei die Anordnung so getroffen ist, dass der gesamte stromauf liegende angeströmte Rand 41 einer Öffnung 29, 38 von der Halbzylinderschale 45 abgedeckt bzw. abgeschattet ist.

## Patentansprüche

1. Sprühkopf für ein Blasrohr, mit einem Zuführrohr (13) für ein zu versprühendes Medium, insbesondere für eine Flüssigkeit oder dgl., mit einer am Sprühkopf (20) ausgebildeten Eintrittsöffnung für die eintretende Blasluft (40) und einer Austrittsöffnung für die aus dem Sprühkopf (20) austretende, mit dem Medium angereicherte Blasluft (44), wobei das Zuführrohr (13) einen äußeren Zuführanschluss für das Medium und eine innere, im Sprühkopf (20) liegende Abgabeöffnung (29) für die Zumischung des Mediums in den Blasluftstrom (40) aufweist, wobei am stromauf liegenden Rand (41) der Abgabeöffnung (29) auf der Anströmseite der Blasluft (40) ein Störkörper (42) für die anströmende Blasluft angeordnet ist, derart, dass die Abgabeöffnung (29) im Windschatten des Störkörpers (42) liegt
**dadurch gekennzeichnet, dass** die Ebene der Abgabeöffnung (29) längs der Strömungsrichtung (18) der Blasluft (40) ausgerichtet liegt, dass das Zuführrohr (13) in einen Abgabekanal (19) mündet, der in je einer Abgabeöffnung (29) endet, und dass die Abgabeöffnungen (29) auf je einer Seite (28) eines im Blasluftstrom (40) liegenden Strömungskörpers (22) liegen.

2. Sprühkopf nach Anspruch 1,
**dadurch gekennzeichnet, dass** der Sprühkopf (20) mit dem Zuführrohr (13) und inneren Einbauten als einteiliges Bauteil ausgebildet ist und der Abgabeöffnung (29) eine in der Wand (31) des Sprühkopfes (20) ausgebildete Schieberöffnung (38) zugeordnet ist, die achsgleich mit der Abgabeöffnung (29) liegt, und dass stromauf der Schieberöffnung (38) auf der Anströmseite der Blasluft (40) ein Störkörper (42) für die anströmende Blasluft angeordnet ist.

3. Sprühkopf nach Anspruch 1 oder 2,
**dadurch gekennzeichnet, dass** im Sprühkopf (20) ein oder mehrere konzentrische Leitringe (25, 26) angeordnet sind, in denen achsgleich zur Abgabeöffnung (29) weitere Schieberöffnungen (38) ausgebildet sind.

4. Sprühkopf nach einem der Ansprüche 1 bis 3,
**dadurch gekennzeichnet, dass** der Störkörper (42) als erhabener Randwulst (43) der Öffnung (29, 38) ausgebildet ist.

5. Sprühkopf nach einem der Ansprüche 1 bis 4,
**dadurch gekennzeichnet, dass** der Störkörper (42) die Öffnung (29, 38) über einen Umfangswinkel von bis zu 180° umgibt.

6. Sprühkopf nach einem der Ansprüche 1 bis 5,
**dadurch gekennzeichnet, dass** der Störkörper (42) auf jeder von der Blasluft überströmten Seite einer Öffnung (38) vorgesehen ist.

7. Sprühkopf nach einem der Ansprüche 1 bis 6,
**dadurch gekennzeichnet, dass** der Strömungskörper (22) den Sprühkopf (20) etwa zentral durchragt.

8. Sprühkopf nach einem der Ansprüche 1 bis 7,
**dadurch gekennzeichnet, dass** die Störkörper (42) aller Öffnungen (29, 38) ein gemeinsames Bauteil (46) bilden.

9. Sprühkopf nach Anspruch 8,
**dadurch gekennzeichnet, dass** der Störkörper (42) als stromauf der Öffnungen (29, 38) angeordneter Stab (46) ausgebildet ist, der quer zur Strömungsrichtung (18) im Blasluftstrom (40) liegt.

10. Sprühkopf nach Anspruch 9,
**dadurch gekennzeichnet, dass** der Stab (46) ein Rundstab (47) ist.

11. Sprühkopf nach Anspruch 10,
**dadurch gekennzeichnet, dass** der Stab im Querschnitt als Teilzylinderschale ausgebildet ist.

12. Sprühkopf nach Anspruch 11,
**dadurch gekennzeichnet, dass** der Stab (46) im Querschnitt eine Halbzylinderschale (45) ist.

## Claims

1. Spray head for a blast pipe, with a feed pipe (13) for a medium to be sprayed, in particular for a liquid or the like, with an inlet opening for the entering blowing air (40) and an outlet opening for the blowing air (44) discharged from the spray head (20) and enriched with the medium, both openings formed on the spray head (20), wherein the feed pipe (13) has an outer feed connection for the medium and an inner output opening (29) in the spray head (20) for adding the medium to the blowing air flow (40), wherein an interference body (42) for the incoming blowing air (40) is arranged at the upstream edge (41) of the output opening (29) on the approach side of the blowing air (40) in such a way that the output opening (29) lies on the lee side of the interference body (42),
**characterised in that** the plane of the output opening (29) is oriented along the flow direction (18) of the blowing air (40), **in that** the feed pipe (13) terminates into an output passage (19) ending in an output opening (29) each, and **in that** the output openings (29) lie on one side (28) each of a flow body (22) lying in the blowing air flow (40).

2. Spray head according to claim 1,
**characterised in that** the spray head (20) is designed as a single component together with the feed pipe (13) and with internal fittings, and **in that** the output opening (29) is assigned a slide opening (38), which is formed in the wall (31) of the spray head (20) and is oriented coaxially with the output opening (29), and **in that** an interference body (42) for the approaching blowing air is arranged upstream of the slide opening (38) on the approach side of the blowing air (40).

3. Spray head according to claim 1 or 2,
**characterised in that** one or more concentric diffuser rings (25, 26), in which further slide openings (38) are formed coaxially with the output opening (29), are arranged in the spray head (20).

4. Spray head according to any of claims 1 to 3,
**characterised in that** the interference body (42) is designed as a raised edge bead (42) of the opening (29, 38).

5. Spray head according to any of claims 1 to 4,
**characterised in that** the interference body (42) surrounds the opening (29, 38) along a circumferential angle of up to 180°.

6. Spray head according to any of claims 1 to 5,
**characterised in that** the interference body (42) is provided on each side of an opening (38) across which the blowing air flows.

7. Spray head according to any of claims 1 to 6,
**characterised in that** the flow body (22) extends approximately centrally through the spray head (20).

8. Spray head according to any of claims 1 to 7,
**characterised in that** the interference bodies (42) of all openings (29, 38) form a common component (46).

9. Spray head according to claim 8,
**characterised in that** the interference body (42) is designed as a rod (46), which is located upstream of the openings (29, 38) and is oriented transversely to the flow direction (18) in the blowing air flow (40).

10. Spray head according to claim 9,
**characterised in that** the rod (46) is a round rod (47).

11. Spray head according to claim 10,
**characterised in that** the rod is designed as a part-cylinder shell in cross-section.

12. Spray head according to claim 11,
**characterised in that** the rod (46) is a semi-cylinder shell in cross-section.

## Revendications

1. Tête de pulvérisation pour un tube de soufflage, avec un tube d'amenée (13) pour un agent de pulvérisation, en particulier pour un liquide ou autre, avec une ouverture d'entrée formée sur la tête de pulvérisation (20), pour l'air de soufflage (40) entrant, et une ouverture de sortie pour l'air de soufflage (44) sortant de la tête de pulvérisation (20) et enrichi avec l'agent, dans laquelle le tube d'amenée (13) comporte un raccord d'alimentation extérieur pour l'agent, et une ouverture de distribution intérieure (29), située dans la tête de pulvérisation (20), pour le mélange de l'agent dans le courant d'air de soufflage (40), dans laquelle il est prévu sur le bord amont (41) de l'ouverture de distribution (29), sur le côté d'afflux de l'air de soufflage (40), un corps perturbateur (42) pour l'air de soufflage affluant, de telle sorte que l'ouverture de distribution (29) se trouve dans le sillage du corps perturbateur (42),
**caractérisée en ce que** le plan de l'ouverture de distribution (29) est orienté le long de la direction d'écoulement (18) de l'air de soufflage (40), que le tube d'amenée (13) débouche dans un conduit de distribution (19) qui se termine dans une ouverture de distribution (29), et que les ouvertures de distribution (29) se trouvent chacune sur un côté (28) d'un corps d'écoulement (22) situé dans le courant d'air de soufflage (40).

2. Tête de pulvérisation selon la revendication 1,
**caractérisée en ce que** la tête de pulvérisation (20) est formée comme une pièce d'un seul tenant avec le tube d'amenée (13) et des accessoires intérieurs, et il est prévu, associée à l'ouverture de distribution (29), une ouverture à coulisseau (38) qui est formée dans la paroi (31) de la tête de pulvérisation (20) et qui se trouve dans le même axe que l'ouverture de distribution (29), et **en ce qu'**un corps perturbateur (42) pour l'air de soufflage affluant est disposé en amont de l'ouverture à coulisseau (38), sur le côté afflux de l'air de soufflage (40).

3. Tête de pulvérisation selon la revendication 1 ou 2,
**caractérisée en ce qu'**il est prévu dans la tête de pulvérisation (20) une ou plusieurs bagues de guidage (25, 26) concentriques dans lesquelles d'autres ouvertures à coulisseau (38) sont formées, coaxialement à l'ouverture de distribution (29).

4. Tête de pulvérisation selon l'une des revendications 1 à 3,
**caractérisée en ce que** le corps perturbateur (42) est conçu comme un renflement de bordure saillant (43) de l'ouverture (29, 38).

5. Tête de pulvérisation selon l'une des revendications 1 à 4,
**caractérisée en ce que** le corps perturbateur (42) entoure l'ouverture (29, 38) sur un angle circonférentiel allant jusqu'à 180°.

6. Tête de pulvérisation selon l'une des revendications 1 à 5,
**caractérisée en ce que** le corps perturbateur (42) est prévu sur chaque côté d'une ouverture (38) sur lequel passe l'air de soufflage.

7. Tête de pulvérisation selon l'une des revendications 1 à 6,
**caractérisée en ce que** le corps d'écoulement (22) traverse de manière à peu près centrale la tête de pulvérisation (20).

8. Tête de pulvérisation selon l'une des revendications 1 à 7,
**caractérisée en ce que** les corps perturbateurs (42) de toutes les ouvertures (29, 38) forment un composant commun (46).

9. Tête de pulvérisation selon la revendication 8,
**caractérisée en ce que** le corps perturbateur (42) est conçu comme une tige (46) qui est disposée en amont des ouvertures (29, 38) et qui est située, dans le courant d'air de soufflage (40), transversalement par rapport au sens d'écoulement (18).

10. Tête de pulvérisation selon la revendication 9,
**caractérisée en ce que** la tige (46) est une tige ronde (47).

11. Tête de pulvérisation selon la revendication 10,
**caractérisée en ce que** la tige, en coupe transversale, a la forme d'une coque partiellement cylindrique.

12. Tête de pulvérisation selon la revendication 11,
**caractérisée en ce que** la tige (46), en coupe transversale, est une coque semi-cylindrique (45).
